Europäisches Patentamt

(19) European Patent Office

Office européen des brevets

(11) Veröffentlichungsnummer: **0 106 999**
**B1**

(12) **EUROPÄISCHE PATENTSCHRIFT**

(45) Veröffentlichungstag der Patentschrift:
26.02.86

(51) Int. Cl.⁴: **C 08 F 210/02** // (C08F210/02, 220:12)

(21) Anmeldenummer: 83108874.5

(22) Anmeldetag: 08.09.83

(54) Copolymerisate des Ethylens mit (Meth)acrylsäurealkylestern.

(30) Priorität: 17.09.82 DE 3234492

(43) Veröffentlichungstag der Anmeldung:
02.05.84 Patentblatt 84/18

(45) Bekanntmachung des Hinweises auf die Patenterteilung:
26.02.86 Patentblatt 86/9

(84) Benannte Vertragsstaaten:
BE DE FR GB NL

(56) Entgegenhaltungen:
US - A - 3 141 870

(73) Patentinhaber: BASF Aktiengesellschaft,
Carl-Bosch-Strasse 38, D-6700 Ludwigshafen (DE)

(72) Erfinder: Ziegler, Walter, Dr., Starenweg 15,
D-6803 Edingen-Neckarhausen (DE)
Erfinder: Brandstetter, Franz, Dr., Ritterbueschel 45,
D-6730 Neustadt (DE)
Erfinder: Gropper, Hans, Dr., Sternstrasse 155,
D-6700 Ludwigshafen (DE)
Erfinder: Haberkorn, Herbert, Dr., Oberer Bergelweg 5,
D-6718 Gruenstadt (DE)
Erfinder: Illers, Karl Heinz, Dr., Huttenstrasse 20,
D-6701 Otterstadt (DE)
Erfinder: Ramsteiner, Falko, Dr., Leo-Falk-Strasse 4,
D-6700 Ludwigshafen (DE)
Erfinder: Sadlowski, Juergen, Dr., Edenkobener
Strasse 3, D-6700 Ludwigshafen (DE)

## Beschreibung

Die Erfindung betrifft Copolymerisate des Ethylens, die auf 100 Mol Ethylen
a) 7,4 bis 14,8 Mol eines $C_1$- bis $C_8$-(Meth)acrylsäurealkylesters und
b) 0 bis 9,5 Mol eines weiteren mit Ethylen copolymerisierbaren Monomeren einpolymerisiert enthalten.

Copolymerisate des Ethylens, die Alkylester der (Meth)acrylsäure einpolymerisiert enthalten, sind beispielsweise aus der GB-PS 870 480 bekannt. Diese Produkte enthalten 0,05 bis 1,5 Mol-% eines Alkylesters der Acrylsäure, sind aber für viele Anwendungsbereiche bei tieferen Temperaturen nicht geeignet.

Ähnliches gilt für die Copolymerisate, wie sie in der GB-PS 900 969 und in der US-PS 2 953 551 beschrieben sind.

Des weiteren sind aus der DE-OS 15 20 734 Ethylencopolymerisate, die 1 bis 50 Mol-% eines Alkylesters der Acrylsäure enthalten und eine Kristallinität von über 50 % haben, bekannt. Diese Produkte besitzen zwar eine gewisse Elastizität und eine geringe Löslichkeit in Aceton, die Reversibilität der Dehnung ist aber unbefriedigend. Dies trifft auch für die Copolymerisate zu, die in der DE-OS 18 10 526 beschrieben sind.

Insgesamt gesehen weisen alle zum Stand der Technik gehörenden Ethylen-(Meth)acrylsäurealkylester-Copolymerisate eine für viele Anwendungsbereiche unbefriedigende reversible Dehnung bei Raumtemperatur auf.

Der Erfindung lag daher die Aufgabe zugrunde Ethylen-(Meth)acrylsäureester-Copolymerisate mit einer möglichst kleinen irreversiblen Dehnung herzustellen.

Diese Aufgabe wurde erfindungsgemäß dadurch gelöst, daß die Ethylen-(Meth)acrylsäurealkylester-Copolymerisate einen kristallinen Anteil von 7 bis 20 %, eine Glastemperatur unterhalb -30°C und einen Schmelzindex kleiner als 60 g/10 min aufweisen.

Die Herstellung der Ethylen-(Meth)acrylsäurealkylester-Copolymerisate kann nach herkömmlichen üblichen Hochdruckpolymerisationsverfahren erfolgen (vgl. Ullmanns Enzyklopädie der Technischen Chemie, 4. Auflage, Band 19, (1980), Seiten 169 bis 175, Verlag Chemie GmbH, D-6940 Weinheim). Die Copolymerisation des Ethylens mit dem Ester der (Meth)acrylsäure, ggfs. zusammen mit anderen mit Ethylen copolymerisierbaren Monomeren, erfolgt bei Drücken von 350 bis 5000 bar, vorzugsweise 1500 bis 3000 bar. Bei der Herstellung der erfindungsgemäßen Copolymerisate des Ethylens arbeitet man im besonderen bei Drücken von 2000 bis 2800 bar. Die Temperaturen im Polymerisationssystem liegen zwischen 50 und 450°C, vorzugsweise zwischen 150 und 350° C. Die Bedingungen im Polymerisationssystem lassen sich apparativ in sogenannten Rohrreaktoren oder Autoklaven einstellen. Unter Rohrreaktoren versteht man rohrförmige Polymerisationsgefäße, deren Längenausdehnung das über 2000 fache, bevorzugt 5000 bis 50 000 fache des Rohrdurchmessers beträgt. Wie üblich, wird ein Teil der Polymerisationswärme durch Kühlung des Rohrreaktors mit Wasser von außen abgeführt. Autoklaven sind Druckgefäße mit einem Längen-/Durchmesser-Verhältnis von 1 bis ca. 20. Besonders geeignet für die Herstellung der erfindungsgemäßen Copolymerisate des Ethylens sind Rohrreaktoren und hierbei vor allem Einzonen- bzw. Zweizonen-Rohrreaktoren. Ganz besonders ist ein Einzonen-Rohrreaktor geeignet.

Die Copolymerisation des Ethylens mit den Estern der (Meth)acrylsäure, ggfs. mit anderen mit Ethylen copolymerisierbaren Monomeren, erfolgt in Gegenwart radikalischer Initiatoren. Unter radikalischen Polymerisationsinitiatoren sollen diejenigen Katalysatoren verstanden werden, die auch für die Homopolymerisation des Ethylens unter hohem Druck verwendet werden. Geeignet ist beispielsweise Sauerstoff, zweckmäßigerweise in Mengen von 10 bis 200 Mol. ppm, bezogen auf das zu polymerisierende Ethylen. In Betracht kommen außerdem Peroxide und andere radikalbildende Verbindungen sowie Gemische von Peroxiden, die unterschiedliche Zerfallstemperaturen haben und Hydroperoxide, vor allem aber auch Mischungen aus Sauerstoff und Peroxiden und/oder Hydroperoxiden. Als Beispiele für Peroxide und Hydroperoxide seien genannt: tert.-Butylperpivalat, di-tert.-Butylperoxid, tert.-Butylhydroperoxid, tert.-Butylperbenzoat, Dilauroylperoxid und tert. Butylperisononanoat. Unter radikalischen Polymerisationsinitiatoren sollen auch Verbindungen wie beispielsweise Azo-iso-Buttersäuredinitril verstanden werden. Man kann auch Mischungen aus Sauerstoff und einem oder mehreren Peroxiden verwenden. Besonders geeignet sind Peroxide, wie di-tert.-Butylperoxid, tert.-Butylperpivalat und tert.-Butylperisononanoat.

Das Molekulargewicht des anfallenden Copolymerisats kann durch die üblichen Regler, z.B. Kohlenwasserstoffe wie Prooan, Propen etc., Ketone wie Aceton, Methylethylketon etc. oder Aldehyde wie Propionaldehyd, auf den gewünschten Wert gebracht werden. Besonders eignet sich hierbei Propionaldehyd.

Die Copolymerisation wird im allgemeinen in Abwesenheit eines Lösungsmittels durchgeführt. Die geringen Mengen eines inerten-Lösungsmittels, wie Benzol, Mineralöle oder andere inerte Lösungsmittel, in denen die Polymerisationsinitiatoren gelöst werden, können gegenüber den anderen Einsatzstoffen vernachlässigt werden. Wird mit Sauerstoff als Polymerisationsinitiator gearbeitet, kann jegliches Lösungsmittel entfallen.

Als Ester der (Meth)acrylsäure kommen Ester von Alkoholen mit $C_1$- bis $C_8$-Kohlenstoffatomen in Prage. Besonders geeignet sind die Ester der Acrylsäure mit $C_1$- bis $C_8$-Alko-holen. Ganz besonders zeichnet sich der Ester der Acrylsäure mit n-Butanol aus.

Es können aber auch Mischungen aus verschiedenen Estern der Acryl- oder Methacrylsäure verwendet werden.

Die erfindungsgemäßen Copolymerisate des Ethylens enthalten 7,4 bis 14,8 Mol, vorzugsweise 9,2 bis 13,2 Mol Ester der (Meth)acrylsäure auf 100 Mol Ethylen einpolymerisiert. Als weitere Comonomere kommen alle mit Ethylen copolymerisierbaren Monomere, insbesondere solche, die monoethylenisch ungesättigt sind, in Frage. Geeignet sind z.B. Vinylcarbonsäureester, insbesondere Vinylester von $C_1$ - bis $C_6$-Alkancarbonsäuren; Ester monoethylensich ungesättigter Dicarbonsäuren, insbesondere Mono- und Diester der Maleinsäure und Pumarsäure; monoethylenisch ungesättigte Carbonsäuren, insbesondere Acryl-, Methacryl-, Malein- und Pumarsäure; Amide monoethylenisch ungesättigter Carbonsäuren, insbesondere Acryl- und Methacrylsäureamid; sowie N-Mono- und N,N-Dialkylamide der Acryl- und Methacrylsäure, monoethylenisch ungesättigte Alkohole, monoethylenisch ungesättigte Ketone, Kohlenmonoxid oder epoxidgruppenhaltige Monomere.

Enthalten die erfindungsgemäßen Copolymerisate des Ethylens neben den Estern der (Meth)acrylsäure noch andere Comonomere, so sind einpolymerisiert auf 100 Mol Ethylen, 7,4 bis 14,8 Mol, vorzugsweise 9,2 bis 13,2 Mol Ester der (Meth)acrylsäure und 0,1 bis 9,5 Mol, vorzugsweise 2 bis 3 Mol eines weiteren mit Ethylen copolymerisierbaren Monomeren.

Die erfindungsgemäßen Copolymerisate des Ethylens haben Schmelzindices von kleiner als 60 g/10 min, vorzugsweise im Bereich von 6 bis 60 g/10 min, besonders aber im Bereich von 8 bis 20 g/10 min, gemessen nach DIN 53 735 bei 190°C und 2,16 Kp.

Die Kristallinität der erfindungsgemäßen Copolymerisate liegt im Bereich von 7 bis 20 %, vorzugsweise im Bereich von 10 bis 18 %. Die Bestimmung erfolgte dabei mit Hilfe der Röntgenweitwinkelstreuung. Die Röntgenweitwinkel(RWWS)-Diagramme wurden in Transmission in einem mit Quarzmonochromator und Proportionalzählrohr ausgerüsteten Diffraktometer (Philips PW 1050/25) unter Verwendung von Cu-K-α-Strahlung (λ = 0,15418 nm) in dem Winkelbereich 3° = $\leq 2\theta \leq$ 46° ($2\theta$ = Beugungswinkel) aufgenommen. Die Zerlegung der RWWS-Diagramme in die diffuse Halostreuung $F_a$ der amorphen Bereiche (Ethylen-n-butylacrylat-Copolymerisat) und in die Kristallstreuung $F_c$ (Polyethylen) erfolgte mit Hilfe eines Kurvenanalysators (DuPont). Die Röntgenkristallinität $w_c$ wurde durch planimetrische Auswertung der RWWS-Diagramme in dem Winkelbereich 3° = $2\theta \leq$ 33° und Anwendung der von Hermans und Weidinger [P.H. Hermans und A. Weidinger, Makromolekulare Chemie, (44 bis 46), (1961), Seite 24] angegebenen Gleichung $w_c = F_c/(F_c + \chi F_a)$ ermittelt, wobei der Faktor $\chi$ wie bei reinem Polyethylen gleich 1 gesetzt wurde.

Bei den erfindungsgemäßen Copolymerisaten liegt die Glastemperatur unterhalb -30° C. Die Bestimmung der Glastemperatur wurde dabei nach der DSC-Methode vorgenommen. Dazu wurden die Proben nach gündlicher Vakuumtrocknung zur Befreiung von Restmonomeren im Kalorimeter auf 120°C erwärmt, von 120°C mit 20°C/min auf -120°C abgekühlt. An den auf diese Weise eine einheitliche thermische Vorgeschichte erteilten Proben wurden die Wärmeflußkurven mit einer Aufheizgeschwindigkeit von 20°C/min aufgenommen. Zur Bestimmung der Glastemperatur wurde die DSC-Kurve der Schmelze (> ca.100°C) linear zu tieferer Temperatur extrapoliert. Es wird angenommen, daß der Schnittpunkt dieser Basislinie mit der DSC-Kurve das obere Ende des Glasübergangsbereiches und das untere Ende des Schmelzbereiches (Schmelzbeginn) darstellt. Als Glastemperatur $T_g$ wird wie üblich die Temperatur definiert, bei der die endotherme Wärmeflußstufe ihren halben Wert erreicht hat.

Zur Bestimmung der Restdehnung wurden bei 190°C Prüfkörper gepreßt und anschließend in der Presse mit Wasser auf Raumtemperatur abgekühlt. Als Probenform wurde ein Streifen von 15 mm Breite und 1,5 mm Dicke gewählt. Die Proben wurden mit einer Meßlänge von 50 mm eingespannt und mit einer Geschwindigkeit von V = 50 mm/min auf 50 % Verformung gebracht und sofort mit gleicher Geschwindigkeit auf Kraft Null entlastet. Unmittelbar anschließend wurde über die Restdehnung der irreversible Verformungsanteil bestimmt.

Die erfindungsgemäßen Ethylen-(Meth)acrylsäurealkylester-Copolymerisate eignen sich u.a. als Schmelzkleber, Haftvermittler, Antidröhnmassen, als Zusatz zu Thermoplasten, Kautschuken, Bitumen, Klebe- und Lacksystemen und als Dämpfungsmassen für mechanische Stöße. Sie besitzen einen nur kleinen Anteil an irreversibler Dehnung.

## Herstellung der Ethylen-Copolymersate

Die Polymerisation des Ethylens mit den $C_1$- bis $C_8$-(Meth)-acrylsäurealkylestern bzw. eines weiteren mit Ethylen copolymerisibiren Monomeren erfolgte bei allen Versuchen in einem rohrförmigen Reaktor mit einem Längen-/Durchmesserverhältnis von etwa 14 000. Zur Abführung der Polymerisationswärme wurden die Rohrwände von außen mit Wasser gekühlt.

## Beispiel 1

Der Reaktor wurde auf der Eingangsseite kontinuierlich mit einem auf 2600 bar komprimierten Gemisch, bestehend aus 1400 kg/h

Ethylen und 72 l/h n-Butylacrylat beschickt. Durch die Zugabe von 1,50 Mol-ppm/h di-tert.-Butylperoxid (DTBP) in Form einer Kohlenwasserstofflösung nach der Hälfte der Reaktorlänge erreichte das Reaktionsgemisch eine Maximaltemperatur von 250°C. Es fielen 170 kg/h Ethylencopolymerisat an, das auf 100 Mol Ethylen 10,5 Mol n-Butylacrylat enthielt und einen Schmelzindex von 13 g/10 min (gemessen nach DIN 53735 bei 190°C und 2,16 kp) aufwies.

## Beispiele 2 bis 5

Die Herstellung der Produkte nach den Beispielen 2 bis 5 erfolgte analog zum Beispiel 1. Die entsprechenden Versuchsparameter sind in der folgenden Tabelle 1 zusammen-gefaßt.

## Beispiel 6

Der Reaktor wurde auf der Eingangsseite kontinuierlich mit einem auf 2600 bar komprimierten Gemisch, bestehend aus 1400 kg/h Ethylen, 73,5 l/h n-Butylacrylat und 8,5 l/h Acrylsäure beschickt. Durch die Zugabe von 1,52 Mol-ppm/h di-tert.-Butylperoxid in Form einer Kohlenwasserstofflösung nach der Hälfte der Reaktorlänge erreichte das Reaktionsgemisch eine Maximaltempertur von 250°C. Es fielen 165 kg/h Ethylencopolymerisat an, das auf 100 Mol Ethylen, 10,9 Mol n-Butylacrylat und 2,4 Mol Acrylsäure enthielt und einen Schmelzindex von 15 g/10 Min (gemessen nach DIN 53375 bei 190°C und 2,16 kp) aufwies.

## Vergleichsversuche

Die nicht erfindungsgemäßen Vergleichsversuche A und B wurden analog den Beispielen 1 bis 5 hergestellt. Die Versuchsparameter sind ebenfalls in der Tabelle 1 enthalten.

## Patentanspruch

Copolymerisate des Ethylens, die auf 100 Mol Ethylen
a) 7,4 bis 14,8 Mol eines $C_1$- bis $C_8$-(Meth)acrylsäurealkylesters und
b) 0 bis 9,5 Mol eines weiteren mit Ethylen copolymerisierbaren Monomeren
einpolymerisiert enthalten, dadurch gekennzeichnet, daß die-Copolymerisate einen kristallinen Anteil von 7 bis 20 % eine Glastemperatur unterhalb -30° C und einen Schmelzindex kleiner als 60 g/10 min aufweisen.

## Claim

Ethylene copolymers containing, as copolymerized units,
(a) 7,4 to 14,8 moles of an alkyl (meth)acrylate of 1 to 8 carbon atoms, and
(b) 0 to 9.5 moles of a further monomer which is copolymerizable with ethylene,
per 100 moles of ethylene, wherein the copolymers contain 7 to 20% of crystalline constituents, and have a glass temperature of below -30° C and a melt index of less than 60g/10 min.

## Revendication

Copolymères de l'éthylène, dans lesquels sont copolymérisées, pour 100 moles d'éthylène,
a) 7,4 à 14,8 moles d'un (méth)acrylate d'alkyle en $C_1$ à $C_8$ et
b) 0 à 9,5 moles d'un autre monomère copolymérisable avec l'éthylène,
caractérisés en ce qu'ils contiennent une fraction cristalline comprise entre 7 et 20 % et possèdent une température de transition vitreuse inférieure à -30°C et un indice de fusion inférieur à 60g/10 mn.

Tabelle 1

| Beispiele (erfindungs- gemäß) | Druck (bar) | max. Polym. temperatur (°C) | Initiator- menge (Mol-ppm/h) | Dosierstelle (bez. auf Re- aktorlänge) | Monomeren- dosierung E (kg/h) | nBA (1/h) | Zusammensetzung- (Mol.nBA) auf 100 Mol Ethylen | MFI (g/10 min) | Ausstoß (kg/h) |
|---|---|---|---|---|---|---|---|---|---|
| 2 | 2600 | 250 | 1,40 DTBP | 1/2 | 1400 | 75 | 11,2 | 21 | 165 |
| 3 | 2600 | 250 | 3,24 " | 1/2 | 1400 | 89 | 12,7 | 45 | 171 |
| 4 | 2600 | 233 | 4,60 TBIN | 3/10 | 1400 | 72 | 13,1 | 11 | 120 |
| 5 | 2600 | 252 | 1,35 DTBP | 1/2 | 1400 | 91 | 13,1 | 30 | 192 |
| Vergleichs- versuche | | | | | | | | | |
| A | 2600 | 250 | 1,32 DTBP | 1/2 | 1400 | 45 | 6,7 | 5 | 144 |
| B | 2600 | 250 | 3,50 " | 1/2 | 1400 | 120 | 4,30 | 200 | 175 |

DTBP - di-tert.Butylperoxid

TBIN - tert.- Butylperisononanat

E - Ethylen

nBA - n-Butylacrylat

00 106 999

# Tabelle 2

| Beispiele (erfin- dungsgem.) | Ester der Acryl- säure auf 100 Mol Ethylen | | weiteres Co- monomer auf 100 Mol Ethylen | | Schmelz- index [g/10min] | Kristallini- tät [%] | Glas- tempe- ratur [°C] | irreversible Dehnung [%] |
|---|---|---|---|---|---|---|---|---|
| | Art | [Mol] | Art | [Mol] | | | | |
| 1 | n-Butyl- acrylat | 10,5 | – | | 13 | 13 | –46 | 9 |
| 2 | " | 11,2 | – | | 21 | 11 | –48 | 9 |
| 3 | " | 12,7 | – | | 45 | 10 | –49 | 10 |
| 4 | " | 13,1 | – | | 11 | 9 | –52 | 9 |
| 5 | " | 13,1 | – | | 30 | 9 | –52 | 9 |
| 6 | " | 10,9 | Acrylsäure | 2,4 | 15 | 12 | –41 | 9 |

Vergleichs- versuche

| | | | | | | | | |
|---|---|---|---|---|---|---|---|---|
| A | n-Butyl- acrylat | 6,7 | – | | 5 | 22 | –43 | 15 |
| B | " | 20,5 | – | | 200 | 3 | –54 | 19 |